# EUROPÄISCHE PATENTANMELDUNG

(11) **EP 4 575 245 A1**
(43) Veröffentlichungstag der Anmeldung: **25.06.2025**
(21) Anmeldenummer: 24215584.4
(22) Anmeldetag: 26.11.2024
(51) Int. Cl.: F16B 37/08

(54) **MUTTER ZUM FESTLEGEN EINES BAUTEILS AN EINEM TRÄGER**

(30) Priorität: 20.12.2023 DE 102023213126
(71) Anmelder: BLANCO GmbH + Co KG, 75038 Oberderdingen (DE)
(72) Erfinder: Hauser, Ingo, 79400 Kandern (DE)
(74) Vertreter: Ullrich & Naumann PartG mbB

(57) **Zusammenfassung**

Die Erfindung betrifft eine Mutter zur Festlegung eines Bauteils an einem Träger, insbesondere einer Sanitärarmatur an einer Arbeitsplatte, umfassend
ein erstes Mutterteil, und
ein zweites Mutterteil, wobei
das erste Mutterteil zumindest zwei Gewindelaschen aufweist, die auf ihrer radialen Innenseite ein Gewinde aufweisen, wobei die beiden Mutterteile relativ zueinander entlang einer axialen Achse verschiebbar angeordnet sind, derart, dass in einer ersten Position - Offenposition - die Gewindelaschen des ersten Mutterteils radial nach außen vorstehend anordenbar sind, und dass in einer zweiten Position - Geschlossenposition - die Gewindelaschen des ersten Mutterteils mittels des zweiten Mutterteils, insbesondere radial nach innen hineinstehend, zum Eingriff in ein entsprechendes Außengewinde des Bauteils anordenbar sind, wobei
das erste und zweite Mutterteil relativ zueinander frei drehbar um die axiale Achse ausgebildet sind.

## Beschreibung

Die Erfindung betrifft eine Mutter zur Festlegung eines Bauteils an einem Träger, insbesondere einer Sanitärarmatur an einer Arbeitsplatte, umfassend ein erstes Mutterteil und ein zweites Mutterteil, wobei das erste Mutterteil zumindest zwei Gewindelaschen aufweist, die auf ihrer radialen Innenseite ein Gewinde aufweisen, wobei die beiden Mutterteile relativ zueinander entlang einer axialen Achse verschiebbar angeordnet sind, derart, dass in einer ersten Position - Offenposition - die Gewindelaschen des ersten Mutterteils radial nach außen vorstehend anordenbar sind und dass in einer zweiten Position - Geschlossenposition - die Gewindelaschen des ersten Mutterteils mittels des zweiten Mutterteils, insbesondere radial nach innen hineinstehend, zum Eingriff in ein entsprechendes Außengewinde des Bauteils anordenbar sind.

Die Erfindung betrifft weiter ein System zur Festlegung eines Bauteils an einem Träger, umfassend eine Mutter.

Die Erfindung betrifft darüber hinaus ein Verfahren zum Festlegen eines Bauteils an einem Träger.

Die Erfindung betrifft ebenfalls ein Verfahren zum Lösen eines an einem Träger festgelegten Bauteils.

Obwohl auf beliebige Bauteile anwendbar, wird die vorliegende Erfindung in Bezug auf Bauteile in Form von Sanitärarmaturen beschrieben.

Obwohl auf beliebige Träger anwendbar, wird die vorliegende Erfindung in Bezug auf Träger in Form von Arbeitsplatten beschrieben.

Sanitärarmaturen sind in vielfältigster Weise bekannt geworden. Diese werden üblicherweise an einer Arbeitsplatte festgelegt, indem die Sanitärarmatur sich mit einem entsprechenden Armaturenschaft teilweise durch eine Befestigungsöffnung der Arbeitsplatte erstreckt. Zur Festlegung der Sanitärarmatur weist der Armaturenschaft ein Außengewinde auf, auf das eine Mutter aufgeschraubt wird.

Problematisch hierbei ist, dass der Armaturenschaft häufig lang ist, um auch bei unterschiedlichen Dicken der Arbeitsplatte verwendet werden zu können. Bei der Montage der Sanitärarmatur ist es dann bei dünnen Arbeitsplatten aufwendig und zeitintensiv, die Mutter bis zur endgültigen Festlegungsposition auf das Außengewinde des Gewindeschafts aufzubringen.

Aus der DE 10 2021 212 266 A1 ist eine Mutter zur Festlegung eines Bauteils an einem Träger, insbesondere einer Sanitärarmatur an einer Arbeitsplatte, bekannt geworden, umfassend ein erstes Mutterteil und ein zweites Mutterteil, wobei das erste Mutterteil zumindest zwei Gewindelaschen aufweist, die auf ihrer radialen Innenseite ein Gewinde aufweisen, wobei die Gewindelaschen unter einem ersten Winkel radial nach außen vorstehend angeordnet sind und wobei die beiden Mutterteile relativ zueinander axial verschiebbar angeordnet sind, derart, dass in einer ersten Position - Offenposition - die Gewindelaschen des ersten Mutterteils radial nach außen vorstehend angeordnet sind und dass in einer zweiten Position - Geschlossenposition - die Gewindelaschen des ersten Mutterteils mittels des zweiten Mutterteils radial nach innen gedrückt werden zum Eingriff in ein entsprechendes Außengewinde des Bauteils.

Nachteilig hierbei ist jedoch, dass zur Montage einer Sanitärarmatur, beispielsweise an einer Arbeitsplatte, ein zusätzliches Stabilisierungsbauteil benötigt wird. Darüber hinaus sind hohe Anforderungen an die Genauigkeit der Mutter bei der Produktion erforderlich, um zu verhindern, dass die Befestigungslaschen eine für die Befestigung nicht geeignete Position aufweisen. Damit sind die Produktionskosten vergleichsweise hoch.

Eine Aufgabe der vorliegenden Erfindung ist es daher, eine Mutter zum Festlegen eines Bauteils an einem Träger und ein System zum Festlegen eines Bauteils an einem Träger anzugeben, welche einfach und kostengünstig herstellbar sind, ein einfaches und schnelles Festlegen und Lösen des Bauteils ermöglichen und für die möglichst wenig Zusatzbauteile notwendig sind.

Eine weitere Aufgabe der vorliegenden Erfindung ist es, eine alternative Mutter zum Festlegen eines Bauteils an einem Träger und ein alternatives System zum Festlegen eines Bauteils an einem Träger anzugeben.

Eine weitere Aufgabe der vorliegenden Erfindung ist es, ein Verfahren zum Festlegen eines Bauteils an einem Träger und ein Verfahren zum Lösen eines an einem Träger festgelegten Bauteils anzugeben, welche einfach, schnell und zuverlässig durchgeführt werden können bei verringertem, für die Montage benötigtem Betätigungsraum für einen Monteur.

Eine weitere Aufgabe der vorliegenden Erfindung ist es, ein alternatives Verfahren zum Festlegen eines Bauteils an einem Träger und ein alternatives Verfahren zum Lösen eines an einem Träger festgelegten Bauteils anzugeben.

In einer Ausführungsform löst die vorliegende Erfindung die vorstehend genannten Aufgaben bei einer Mutter zur Festlegung eines Bauteils an einem Träger, insbesondere einer Sanitärarmatur an einer Arbeitsplatte, umfassend
ein erstes Mutterteil, und
ein zweites Mutterteil, wobei
das erste Mutterteil zumindest zwei Gewindelaschen aufweist, die auf ihrer radialen Innenseite ein Gewinde aufweisen, wobei die beiden Mutterteile relativ zueinander entlang einer axialen Achse verschiebbar angeordnet sind, derart, dass in einer ersten Position - Offenposition - die Gewindelaschen des ersten Mutterteils radial nach außen vorstehend anordenbar sind und dass in einer zweiten Position - Geschlossenposition - die Gewindelaschen des ersten Mutterteils mittels des zweiten Mutterteils, insbesondere radial nach innen hineinstehend, zum Eingriff in ein entsprechendes Außengewinde des Bauteils anordenbar sind,
dadurch, dass
das erste und zweite Mutterteil relativ zueinander frei drehbar um die axiale Achse ausgebildet sind.

In einer weiteren Ausführungsform löst die vorliegende Erfindung die vorstehend genannten Aufgaben mit einem System zur Festlegung eines Bauteils an einem Träger, umfassend
eine Mutter gemäß einem der Ansprüche 1-12, wobei das Bauteil ein Außengewinde aufweist, welches zu dem Gewinde der Mutter korrespondiert, sodass die Mutter in ihrer Geschlossenposition auf das Außengewinde aufschraubbar ist und wobei in ihrer Offenposition das Gewinde zumindest in einem Bereich mit einem Innendurchmesser versehbar ist, der größer ist als der Außendurchmesser des Außengewindes.

In einer weiteren Ausführungsform löst die vorliegende Erfindung die vorstehend genannten Aufgaben mit einem Verfahren zum Festlegen eines Bauteils an einem Träger, umfassend die Schritte:
- Bereitstellen einer Mutter gemäß einem der Ansprüche 1-12 in der Offenposition,
- Bereitstellen des Bauteils, wobei das Bauteil ein Außengewinde aufweist, welches zu dem Gewinde der Mutter korrespondiert, sodass die Mutter in ihrer Geschlossenposition auf das Außengewinde aufschraubbar ist,
- Anordnen des Bauteils an dem Träger,
- Schieben der Mutter in ihrer Offenposition über das Außengewinde des Bauteils, bis die Mutter mit ihrem zweiten Mutterteil an dem Träger anliegt,
- Betätigen des ersten Mutterteils, bis sich die Mutter in ihrer Geschlossenposition befindet zum Eingriff des Gewindes in das Außengewinde des Bauteils, und
- Betätigen des Gewindes der Mutter durch Drehen der Mutter zum Festlegen des Bauteils an dem Träger.

In einer weiteren Ausführungsform löst die vorliegende Erfindung die vorstehend genannten Aufgaben mit einem Verfahren zum Lösen eines an einem Träger festgelegten Bauteils, umfassend die Schritte:
- Bereitstellen einer Mutter gemäß einem der Ansprüche 1-12 in ihrer Geschlossenposition an dem Bauteil, wobei das Bauteil ein Außengewinde aufweist, welches zu dem Gewinde der Mutter korrespondiert und wobei das Gewinde der Mutter in das Außengewinde des Bauteils eingreift,
- Betätigen des Gewindes der Mutter durch Drehen der Mutter zum Lösen des Bauteils von dem Träger bis sich die Mutter in ihrer Offenposition befindet, und
- Freigeben der Mutter zum Verbringen der Mutter in ihre Offenposition über das Außengewinde des Bauteils zum Lösen des Bauteils von dem Träger.

Einer der damit erzielten Vorteile ist, dass eine vereinfachte Montage von Bauteilen an Trägern mittels der Mutter ermöglicht wird. Ein weiterer Vorteil ist, dass bei der Montage die Mutter im Wesentlichen selbstschließend von ihrer Offenposition in die Geschlossenposition gezwungen wird und auf diese Weise eine schnelle Montage mit wenigen Handgriffen ermöglicht wird. Ein weiterer Vorteil ist die einfache und kostengünstige Herstellung der beiden Mutterteile, beispielsweise aus Kunststoff, vorzugsweise mittels Spritzgießen. Durch die freie Drehung der beiden Mutterteile zueinander ist es möglich, beispielsweise Stabilisierungselemente, direkt an beziehungsweise mit der Mutter verbunden anzuordnen, was Zusatzbauteile reduziert. Weiterhin kann beispielsweise ein Stabilisierungselement bei der Montage an einer Arbeitsplatte oder dergleichen frei ausgerichtet werden.

Der Begriff "freie Drehung" in Bezug auf die beiden Mutterteile ist im weitesten Sinne zu verstehen und bezieht sich insbesondere in den Ansprüchen, vorzugsweise in der Beschreibung auf die Möglichkeit einer unbeschränkten relativen Drehung unabhängig von der Drehrichtung, insbesondere in zumindest eine Drehrichtung der beiden Mutterteile in der Offenposition, beim Übergang von der Offen- in die Geschlossenposition oder umgekehrt und/oder in der Geschlossenposition. Hierbei kommt es insbesondere lediglich auf die objektive Möglichkeit einer freien Drehung an, unabhängig von etwaigen, für eine relative Drehung zu überwindenden Kräften, beispielsweise Reibungskräften oder dergleichen.

Das Merkmal "radial nach außen vorstehend anordenbar" in Bezug auf das Merkmal "Gewindelasche" ist im weitesten Sinne zu verstehen und bezieht sich insbesondere in den Ansprüchen, vorzugsweise in der Beschreibung auf die Möglichkeit einer Beweglichkeit nach außen, ohne dass eine Bewegung der Gewindelasche zwingend nach außen während des Betätigens der beiden Mutterteile erfolgen muss. Die Gewindelaschen sind vorzugsweise parallel zur Axialrichtung und/oder radial nach innen in Bezug auf die Mutterteile angeordnet.

Weitere Merkmale, Vorteile und weitere Ausführungsformen der Erfindung sind im Folgenden beschrieben oder werden dadurch offenbar.

Gemäß einer vorteilhaften Weiterbildung der Erfindung sind das erste und zweite Mutterteil aneinander mittels einer Festlegeeinrichtung festlegbar, welche insbesondere lösbar ausgebildet ist. Vorteil hiervon ist eine flexible und einfache Festlegung der beiden Mutterteile aneinander, beispielsweise um eine begrenzte axiale Verschieblichkeit bereitzustellen. Die Mutterteile können dabei lösbar aneinander festgelegt sein.

Gemäß einer weiteren vorteilhaften Weiterbildung der Erfindung umfasst die Festlegeeinrichtung eine Rast-, Clips- oder Schnappeinrichtung. Vorteil hiervon ist eine einfache und schnelle Festlegung der beiden Mutterteile aneinander.

Gemäß einer weiteren vorteilhaften Weiterbildung der Erfindung weist die Festlegeeinrichtung zumindest eine Kulisse auf, in die zumindest ein Kulissenelement eingreift, insbesondere wobei die zumindest eine Kulisse in dem zweiten Mutterteil angeordnet ist und das Kulissenelement am ersten Mutterteil. Damit wird eine einfache und gleichzeitig zuverlässige Führung der beiden Mutterteile bereitgestellt. Der Begriff "Kulisse" ist im weitesten Sinne zu verstehen und bezieht sich, insbesondere in den Ansprüchen, vorzugsweise in der Beschreibung auf Ausnehmungen, Öffnungen, Vorsprünge, Rücksprünge oder dergleichen, die zumindest eine teilweise Beschränkung der Beweglichkeit eines Kulissenelements in der Kulisse bereitstellen.

Gemäß einer weiteren vorteilhaften Weiterbildung der Erfindung umfasst die Festlegevorrichtung aneinander gleitbare und gegenüber der axialen Richtung unter einem Winkel abgeschrägte Flächen an erstem und zweitem Mutterteil, insbesondere wobei der Winkel bezogen auf die axiale Richtung zumindest 5 Grad, insbesondere zumindest 10 Grad, vorzugsweise zumindest 15 Grad, insbesondere zumindest 30 Grad, beträgt. Damit wird eine ausreichend große Andrückkraft der Gewindelaschen auf ein Außengewinde in der Geschlossenposition bereitgestellt, ohne dass sich der Bauraum für die Mutter wesentlich vergrößert.

Gemäß einer weiteren vorteilhaften Weiterbildung der Erfindung ist eine Rückstelleinrichtung angeordnet, die ausgebildet ist, eine Rückstellkraft in Richtung der Offenposition auszuüben. Damit kann eine einfache Lösbarkeit der Mutter, beispielsweise wenn das Bauteil zu Wartungszwecken ausgetauscht werden soll, sichergestellt werden. Wird die Mutter entsprechend betätigt, geht die Mutter "automatisch" in ihre Offenposition, sodass diese schnell und einfach, beispielsweise von einem Sanitärarmaturenschaft, abgezogen werden kann.

Gemäß einer weiteren vorteilhaften Weiterbildung der Erfindung umfasst die Rückstelleinrichtung eine Federeinrichtung mit zumindest einem Federelement, die zwischen erstem und zweitem Mutterteil angeordnet ist. Vorteil hiervon ist eine einfache und zuverlässige Bereitstellung einer Rückstellkraft.

Gemäß einer weiteren vorteilhaften Weiterbildung der Erfindung ist am zweiten Mutterteil zumindest ein Rückhalteelement, insbesondere mehrere Rückhalteelemente, angeordnet, wobei das zumindest eine Federelement an dem zumindest einen Rückhalteelement abstützend anordenbar ist. Vorteil hiervon ist eine zuverlässige Bereitstellung einer Rückstellkraft durch das Federelement.

Gemäß einer weiteren vorteilhaften Weiterbildung der Erfindung ist ein Rückhalteelement in Form eines Randes des zweiten Mutterteils ausgebildet. Vorteil hiervon ist, dass keine separaten Rückhalteelemente ausgebildet werden müssen.

Gemäß einer weiteren vorteilhaften Weiterbildung der Erfindung ist das zumindest eine Federelement in Form einer Tellerfeder ausgebildet, welche lösbar zwischen erstem und zweitem Mutterteil angeordnet ist oder das zumindest eine Federelement ist in Form von zumindest zwei, insbesondere symmetrisch, am ersten und/oder zweiten Mutterteil angeordneten Vorsprüngen in Richtung auf das jeweils andere Mutterteil ausgebildet. Vorteil einer Feder, insbesondere aus Metall, vorzugsweise einer Tellerfeder ist die zuverlässige Bereitstellung von Federkraft. Vorteil von elastischen und/oder federnden Vorsprüngen, welche beispielsweise bogenförm ig auf der fortgesetzt gedachten Umfangsfläche des ersten Mutterteils angeordnet sind, ist eine kostengünstige Herstellung, da diese beispielsweise direkt an das erste Mutterteil angeformt oder damit einstückig hergestellt werden können.

Gemäß einer weiteren vorteilhaften Weiterbildung der Erfindung sind die Rückstelleinrichtung und die Festlegeeinrichtung derart ausgebildet, sodass die Rückstelleinrichtung und die Festlegeeinrichtung zur Bereitstellung der Offenposition zusammenwirken. Dies ermöglicht eine Reduktion von Bauteilen insgesamt, was die Herstellungskosten senkt.

Gemäß einer weiteren vorteilhaften Weiterbildung der Erfindung sind die Gewindelaschen in ihrem unbelasteten Zustand parallel zur axialen Richtung angeordnet. Dies ermöglicht eine einfache Herstellung der Gewindelaschen bei gleichzeitig hohen Toleranzen bei der Fertigung, ohne dass ein Eingriff der Gewindelaschen in ein Außengewinde nicht mehr möglich ist.

Gemäß einer weiteren vorteilhaften Weiterbildung der Erfindung beträgt die Anzahl der Gewindelaschen weniger als 30, vorzugsweise weniger als 15, insbesondere weniger als 8, vorzugsweise 4 und mehr als 2. Damit wird eine ausreichende Anzahl von Gewindelaschen bereitgestellt bei gleichzeitig zuverlässigem Eingriff in der Geschlossenposition.

Gemäß einer weiteren vorteilhaften Weiterbildung der Erfindung ist eine Offenhalteeinrichtung zum Bereitstellen der Offenposition angeordnet. Dies ermöglicht eine besonders einfache Montage.

Gemäß einer weiteren vorteilhaften Weiterbildung der Erfindung weist die Offenhalteeinrichtung zumindest ein längliches Element auf, welches in oder an zumindest einer Öffnung, insbesondere form- oder reibschlüssig, gehalten wird und während des Übergangs von der Offen- in die Geschlossenposition in die zumindest eine Öffnung eingreift, insbesondere wobei das zumindest eine längliche Element und die zumindest eine Öffnung am ersten Mutterteil angeordnet sind. Vorteil hiervon ist eine einfache Handhabung der Mutter bei der Montage. Eine formschlüssige Anordnung des länglichen Elements kann beispielsweise mittels einem oder mehreren schmalen Stegen, die als Sollbruchstellen dienen, in der Öffnung erfolgen, die das längliche Element in oder an dieser halten und bei Krafteinwirkung, also bei einem Zusammenschieben der beiden Mutterteile, brechen, sodass das längliche Element dann in die Öffnung gedrückt oder geschoben wird.

Gemäß einer weiteren vorteilhaften Weiterbildung der Erfindung ist das erste Mutterteil teilweise im zweiten Mutterteil angeordnet und das erste Mutterteil ist zumindest teilweise auf der radialen Außenseite des zweiten Mutterteils angeordnet oder umgekehrt. Vorteil hiervon ist eine definierte Anordnung und eine definierte Führung der beiden Mutterteile aneinander, was die Handhabung der Mutter, insbesondere bei der Montage, vereinfacht.

Gemäß einer weiteren vorteilhaften Weiterbildung der Erfindung weist das zweite Mutterteil auf der dem ersten Mutterteil abgewandten axialen Seite eine Anlageeinrichtung zur Anlage der Mutter an dem Bauteil auf. Dies ermöglicht eine zuverlässige Festlegung des Bauteils an einem Träger mittels der Mutter.

Gemäß einer weiteren vorteilhaften Weiterbildung der Erfindung umfasst die Anlageeinrichtung ein flächiges Bauteil, welches insbesondere dreiecksförmig ausgebildet ist. Vorteil hiervon ist eine zuverlässige Festlegung bei gleichzeitig geringem Materialeinsatz für die Anlageeinrichtung, die zum Ausrichten des Bauteils an dem Träger mittels der Mutter dienen kann.

Gemäß einer weiteren vorteilhaften Weiterbildung der Erfindung weist die Anlageeinrichtung zumindest eine, insbesondere mehrere, Materialschwächungen, insbesondere Schlitze, zum Abtrennen auf. Vorteil hiervon ist eine hohe Anpassbarkeit der Mutter vor Ort durch den Monteur. Dieser kann vor Ort die Anlageeinrichtung an die örtlichen Gegebenheiten, ohne großen Aufwand anpassen.

Weitere wichtige Merkmale und Vorteile der Erfindung ergeben sich aus den Unteransprüchen, aus den Zeichnungen und aus der dazugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungen und Ausführungsformen der vorliegenden Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile oder Elemente beziehen.

Dabei zeigt
- Fig. 1: ein System mit einer Mutter gemäß einer Ausführungsform der vorliegenden Erfindung im Querschnitt in einer Offenposition;
- Fig. 2: ein System mit einer Mutter gemäß einer Ausführungsform der vorliegenden Erfindung im Querschnitt in einer Offenposition;
- Fig. 3: das System gemäß Figur 2 in einer Geschlossenposition;
- Fig. 4: eine dreidimensionale Ansicht von oben auf eine Mutter gemäß einer Ausführungsform der vorliegenden Erfindung;
- Figur 5: in schematischer Form Schritte eines Verfahrens gemäß einer Ausführungsform der vorliegenden Erfindung; und
- Figur 6: in schematischer Form Schritte eines Verfahrens gemäß einer Ausführungsform der vorliegenden Erfindung.

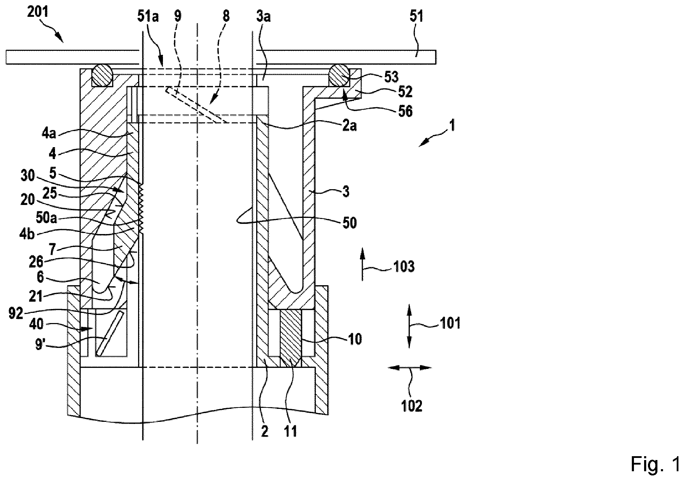

Figur 1 zeigt ein System mit einer Mutter gemäß einer Ausführungsform der vorliegenden Erfindung im Querschnitt in einer Offenposition.

In der Figur 1 ist ein System 100 mit einer Mutter 1 in ihrer Offenposition 201 gezeigt. Die Mutter 1 umfasst dabei ein erstes Mutterteil 2 und ein zweites Mutterteil 3. Beide Mutterteile 2, 3 sind kreisförmig im Querschnitt entlang einer Axialrichtung 101 angeordnet. In der Darstellung der Figur 1 ist die im wesentlichen zylindrische Mutter 1 rechts der Axialrichtung aus zeichnerischen Gründen breiter dargestellt als links der Axialrichtung.

Das erste Mutterteil 2 weist weiter Gewindelaschen 4 auf, die in der Offenposition 201, in der die Gewindelaschen 4 radial lastfrei angeordnet sind, parallel zur Axialrichtung 101 angeordnet sind. Ein Anfangsbereich 4a einer Gewindelasche 4 ist im Wesentlichen direkt an beziehungsweise parallel zu der Oberfläche des ersten Mutterteils 2 angeordnet wie auch ein Endbereich 4b, wobei im Endbereich 4b auf dessen radialer Außenseite zwei Gleitflächen 25, 26 angeordnet sind, die mit einem Winkel 92 gegenüber der Axialrichtung 101 radial nach außen (Radialrichtung 102) geneigt ist. Diese Gleitflächen 25, 26, die im Endbereich 4b im Wesentlichen im Querschnitt ein Parallelogramm bilden, greifen mittels einer Verbindung 30 in eine Kulisse 6 beziehungsweise Aussparung des zweiten Mutterteils 3 ein, welche im Wesentlichen ebenfalls im Querschnitt trapez-, insbesondere parallelogrammförmig, ausgebildet ist und sowohl eine begrenzte axiale Verschieblichkeit entlang der Axialrichtung 101 der beiden Gleitflächen 25, 26 ermöglicht, als auch eine begrenzte radiale Beweglichkeit des Endbereichs 4b nach außen. Der Endbereich 4b mit den genannten Gleitflächen 25, 26 fungiert somit als Kulissenelement 7. Die Kulisse 6 weist hierzu eine obere Gleitfläche 20 auf und eine untere Gleitfläche 21, wobei die in Axialrichtung 101 obere Gleitfläche 20 zu der Gleitfläche 25 und die in Axialrichtung untere Gleitfläche 21 zu der Gleitfläche 26 des Kulissenelements 7 korrespondiert.

Das zweite Mutterteil 3 ist - wie auch das erste Mutterteil 2 - im Wesentlichen als Hohlzylinder ausgebildet, wobei der Innendurchmesser des zweiten Mutterteils 3 so ausgebildet ist, dass das zweite Mutterteil 3 über dem ersten Mutterteil 2 beziehungsweise das erste Mutterteil 2 zumindest teilweise im Inneren des zweiten Mutterteils 3 angeordnet werden kann. Das zweite Mutterteil 3 weist an seinem oberen Rand einen radial nach innen ragenden umlaufenden Vorsprung 3a auf, der als Anschlag für das erste Mutterteil 2 mit seiner oberen Randfläche 2a dient. Weiterhin dient der umlaufende Vorsprung 3a auch als Einführhilfe bei der Montage und zum Schutz des ersten Mutterteils 2 bei der Montage, damit das Gewinde 5 nicht das erste Mutterteil 2 beschädigt.

Wird nun das erste Mutterteil 2 weiter in das zweite Mutterteil 3 in Axialrichtung 101 aus der Offenstellung 201 geschoben, mit anderen Worten, bewegt sich die obere Randfläche 2a auf den Vorsprung 3a in Festlegungsrichtung 103 zu, so liegt die Gleitfläche 26 nicht mehr an der Gleitfläche 21 an, sondern durch die axiale Bewegung werden nun die Gleitflächen 20, 25 gegeneinandergedrückt. Dies bewirkt, dass der Endbereich 4b radial nach innen in Richtung auf ein in dem ersten Mutterteil 2 angeordnetes Bauteil 50 mit Außengewinde 50a gedrückt wird, sodass das Gewinde 5 der Gewindelaschen 4 in Eingriff mit dem in dem ersten Mutterteil 2 angeordneten Außengewinde 50a des Bauteils 50 kommen kann. Dann kann mittels Rotation des ersten Mutterteils 2 die Mutter 1 an dem Bauteil 50 festgelegt werden. Das Bauteil 50 selbst ragt durch eine entsprechende Öffnung 51a in einer Arbeitsplatte 51 oder einem Sanitärbecken einer Küche hindurch.

Darüber hinaus ist im oberen Bereich des zweiten Mutterteils 3 ein Stabilisierungsdreieck 52 angeordnet. Ebenso kann dort eine Ringdichtung 53, die sich in einer Aussparung beziehungsweise einem Vorsprung 56 im oberen Bereich des zweiten Mutterteils 3 abstützt, angeordnet sein.

Um die Mutter 1 einfacher wieder lösen zu können, sind zwischen erstem Mutterteil 2 und zweitem Mutterteil 3 ein oder mehrere Federelemente 9 einer Federeinrichtung 8 angeordnet, die eine Rückstellkraft bereitstellt und das erste Mutterteil 2 in Richtung auf die Offenstellung 201 drückt. Zwar ist ein Lösen der Mutter 1 auch ohne Federelemente 9 möglich, aber die Federelemente 9 ermöglichen, dass sich automatisch die offene Stellung der Mutter 1 ergibt und nach ein oder mehreren Umdrehungen die Offenstellung 201 erreicht wird, sodass dann die Mutter 1 für die Demontage ohne weitere Drehung entfernt werden kann.

Alternativ oder zusätzlich zu einem Federelement kann am ersten Mutterteil 2 ein in axialer Richtung 101 nach oben ragender Stift 11 im radial äußeren Bereich angeordnet werden, der in eine entsprechende Öffnung 10 im ersten Mutterteil 2 eingreifen kann. Hierbei kann der Stift 11 in der Öffnung 10 über einen oder mehrere Stege gehalten werden, sodass einerseits eine freie Drehbarkeit der beiden Mutterteile 2, 3 zueinander bei gleichzeitiger Beabstandung der beiden Mutterteile 2, 3 in der Offenstellung 201 gewährleistet ist, andererseits der Stift 11 dann beim Festlegen der Mutter 1 unabhängig von der Umfangsposition der beiden Mutterteile 2, 3 zueinander durch Brechen der Stege in die Öffnung 10 gedrückt wird.

Das Gewinde 5 der Gewindelaschen 4 kann dabei im zum Anfangsbereich 4a benachbarten Bereich abgetragen sein, sprich ein oder mehrere Gewindegänge sind gekürzt, um so wenig Überdeckung mit einem Außengewinde 50a eines Bauteils 50 bereitzustellen, was ein einfacheres Aufschieben der Mutter 1 auf ein entsprechendes Außengewinde 50a eines Bauteils 50 ermöglicht.

Alternativ oder zusätzlich kann die Federeinrichtung 8 mit einem Federelement 9' anstelle der Position oberhalb des ersten Mutterteils 2 auch im unteren Bereich des ersten Mutterteils 2 beziehungsweise im Übergangsbereich 40 zwischen erstem und zweitem Mutterteil 2, 3 angeordnet sein. Das Federelement 9' ist am ersten Mutterteil 2 angeordnet und liegt am unteren Bereich des zweiten Mutterteils 3 an. Insgesamt wird dieses dann in Axialrichtung 101 relativ zum ersten Mutterteil 2 nach oben gedrückt. Vorteil einer solchen Anordnung ist, dass die vertikale Gesamterstreckung entlang der Axialrichtung 101 im Gegensatz zu der Anordnung der Federeinrichtung 8 mit Federelement 9 reduziert werden kann. Die in Figur 1 gezeigte Anordnung hat umgekehrt den Vorteil, dass die Breite der Mutter 1, also der Durchmesser senkrecht zur Axialrichtung 101 reduziert werden kann.

Das Federelement 9 und/oder das Federelement 9` kann jeweils als zusätzliches Bauteil ausgebildet sein, insbesondere in Form einer Tellerfeder. Das jeweilige Federelement 9, 9` kann dann so ausgebildet werden, dass dieses am ersten Mutterteil 2 formschlüssig gehalten beziehungsweise eingelegt wird.

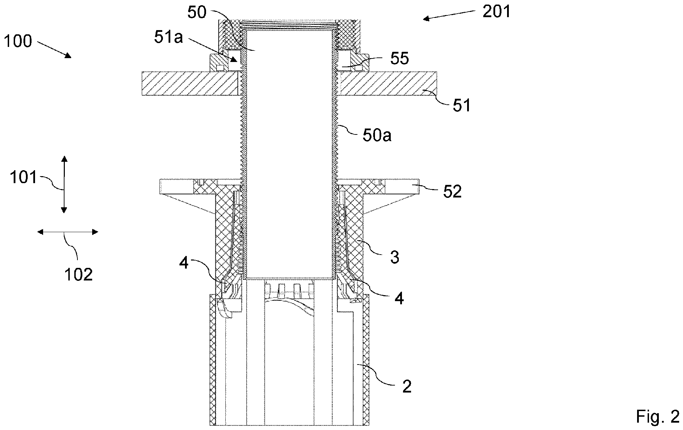

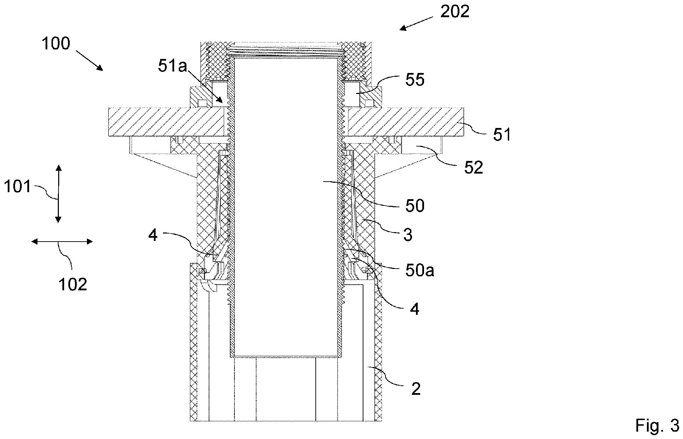

Figur 2 zeigt ein System mit einer Mutter gemäß einer Ausführungsform der vorliegenden Erfindung im Querschnitt in einer Offenposition und Figur 3 das System gemäß Figur 2 in einer Geschlossenposition.

In Figur 2 ist eine Mutter 1 gemäß der Figur 1 in der Offenposition 201 und in Figur 3 in der Geschlossenposition 202 gezeigt. Im Wesentlichen entspricht die Mutter 1 gemäß der Figuren 2 und 3 der Mutter 1 gemäß Figur 1.

In der Geschlossenposition 202 befindet sich die obere Randfläche 2a (siehe Figur 1) direkt am Vorsprung 3a (siehe Figur 1) und die Gewindelaschen 4 sind nach innen gedrückt beziehungsweise radial in ihrer Position parallel zur Axialrichtung 101 festgelegt. Mit anderen Worten können die Gewindelaschen 4 nicht radial nach außen auf Grund der gleitenden Anlage der Gleitflächen 20, 25 (siehe Figur 1) von erstem und zweiten Mutterteil 2, 3 aneinandergedrückt werden. Das Bauteil 50 greift dabei wie in den voranstehenden Figuren durch eine Öffnung 51a hindurch und ist mit einem Grundkörper 55 einer Armatur auf der Oberseite der Arbeitsplatte 51 oder dergleichen zu dessen Festlegung mittels einer Schraubverbindung verbunden.

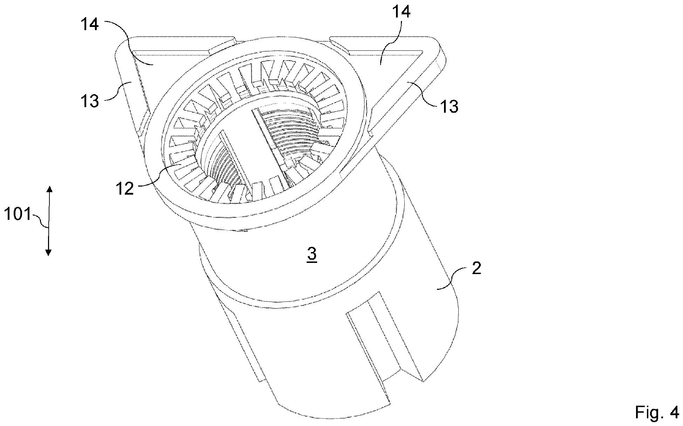

Figur 4 zeigt eine dreidimensionale Ansicht von oben auf eine Mutter gemäß einer Ausführungsform der vorliegenden Erfindung.

In Figur 4 ist eine Schrägansicht von oben auf das zweite Mutterteil 3 gezeigt. Im oberen Bereich sind zwei senkrecht zur Axialrichtung 101 sich erstreckende dreiecksförmige flächige Vorsprünge 13 angeordnet, die jeweils Ausnehmungen 14 aufweisen. Diese Ausnehmungen 14 können beispielsweise mittels eine Schneidwerkzeugs durchtrennt werden und so die Vorsprünge 13 an örtliche Gegebenheiten angepasst werden.

Insgesamt bilden die beiden Vorsprünge 13 zusammen mit dem oberen, zweiten Mutterteil 3 ein Stabilisierungsdreieck, welches von unten, beispielsweise an einer Arbeitsplatte flächenbündig anliegt und ein Verkippen einer an der Arbeitsplatte festgelegten Sanitärarmatur verhindert.

Zur Abstützung des einen oder der mehreren Federelemente 9 der Federeinrichtung 8, die zwischen den beiden Mutterteilen 2, 3 angeordnet ist und diese in Axialrichtung 101 mit einer Vorspannkraft auseinanderdrückt, sind im oberen Bereich des zweiten Mutterteils 3 umfänglich und radial nach innen und unten ragend haken- oder L-förmige Vorsprünge 12 angeordnet. An diesen Vorsprüngen 12 kann sich beispielsweise ein Federelement 9 in Form einer Tellerfeder abstützen.

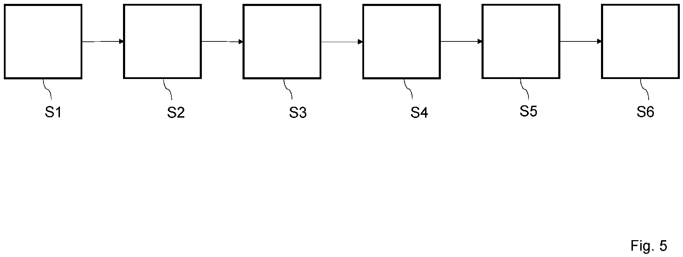

Figur 5 zeigt in schematischer Form Schritte eines Verfahrens gemäß einer Ausführungsform der vorliegenden Erfindung.

Figur 5 zeigt Schritte eines Verfahrens zum Festlegen eines Bauteils an einem Träger.

Das Verfahren umfasst die Schritte:
- Bereitstellen S1 einer Mutter 1 gemäß einem der Ansprüche 1-12 in der Offenposition 201,
- Bereitstellen S2 des Bauteils 50, wobei das Bauteil 50 ein Außengewinde 50a aufweist, welches zu dem Gewinde 5 der Mutter 1 korrespondiert, sodass die Mutter 1 in ihrer Geschlossenposition 202 auf das Außengewinde 50a aufschraubbar ist,
- Anordnen S3 des Bauteils 50 an dem Träger 51,
- Schieben S4 der Mutter 1 in ihrer Offenposition 201 über das Außengewinde 50a des Bauteils 50, bis die Mutter 1 mit ihrem zweiten Mutterteil 3 an dem Träger 51 anliegt,
- Betätigen S5 des ersten Mutterteils 2, bis sich die Mutter 1 in ihrer Geschlossenposition 202 befindet zum Eingriff des Gewindes 5 in das Außengewinde 50a des Bauteils 50, und
- Betätigen S6 des Gewindes 5 der Mutter 1 durch Drehen der Mutter 1 zum Festlegen des Bauteils 50 an dem Träger 51.

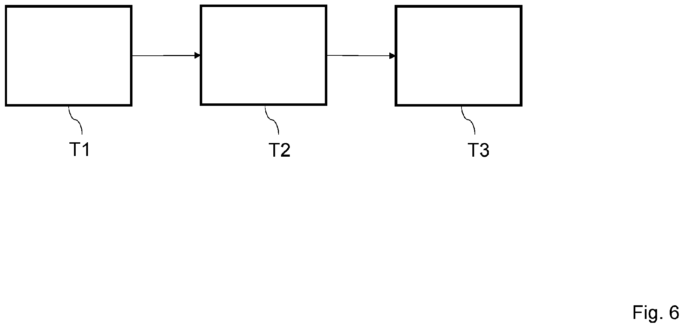

Figur 6 zeigt in schematischer Form Schritte eines Verfahrens gemäß einer Ausführungsform der vorliegenden Erfindung.

Figur 6 zeigt Schritte eines Verfahrens zum Lösen eines an einem Träger 51 festgelegten Bauteils 50, umfassend die Schritte
- Bereitstellen T1 einer Mutter 1 gemäß einem der Ansprüche 1-12 in ihrer Geschlossenposition 202 an dem Bauteil 50, wobei das Bauteil 50 ein Außengewinde 50a aufweist, welches zu dem Gewinde 5 der Mutter 1 korrespondiert, und wobei das Gewinde 5 der Mutter 1 in das Außengewinde 50a des Bauteils 50 eingreift,
- Betätigen T2 des Gewindes 5 der Mutter 1 durch Drehen der Mutter 1 zum Lösen des Bauteils 50 von dem Träger 51 bis sich die Mutter 1 in ihrer Offenposition 201 befindet, und
- Freigeben T3 der Mutter 1 zum Verbringen der Mutter 1 in ihre Offenposition 201 über das Außengewinde 50a des Bauteils 50 zum Lösen des Bauteils 50 von dem Träger 51.

Zusammenfassend weist zumindest eine Ausführungsform der vorliegenden Erfindung zumindest eines der folgenden Merkmale auf und/oder kann zumindest einen der folgenden Vorteile bereitstellen:
- Einfache, kostengünstige und schnelle Montage und Demontage.
- Einfache, kostengünstige Herstellung.
- Wenig Bauteile für die Mutter.
- "Selbstschließende" Mutter.
- Entfall von zusätzlichen Bauteilen, beispielsweise einem Stabilisierungsdreieck und/oder einer Unterlagscheibe.
- Zwangsgesteuerte Lage der Gewindelaschen am ersten Mutterteil durch das zweite Mutterteil.

Obwohl die vorliegende Erfindung anhand bevorzugter Ausführungsbeispiele beschrieben wurde, ist sie nicht darauf beschränkt, sondern auf vielfältige Weise modifizierbar.

### Bezugszeichenliste

- 1: Mutter
- 2: Erstes Mutterteil
- 2a: Randfläche
- 3: Zweites Mutterteil
- 3a: Vorsprung
- 4: Gewindelasche
- 4a: Anfangsbereich
- 4b: Endbereich
- 5: Gewinde
- 6: Kulisse
- 7: Kulissenelement
- 8: Federeinrichtung
- 9, 9`: Federelement
- 10: Aussparung
- 11: Stift
- 12: Vorsprung
- 13: Flächiger Vorsprung
- 14: Ausnehmung
- 20: Obere Gleitfläche
- 21: Untere Gleitfläche
- 25: Gleitfläche
- 26: Gleitfläche
- 30: Klipsverbindung
- 40: Übergangs-/Anlagebereich
- 50: Bauteil
- 50a: Außengewinde
- 51: Träger
- 51a: Öffnung
- 52: Stabilisierungsdreieck
- 53: Ringdichtung
- 55: Grundkörper Armatur
- 56: Vorsprung
- 92: Winkel

- 100: System
- 101: Axialrichtung
- 102: Radialrichtung
- 103: Festlegungsrichtung
- 201: Offenposition
- 202: Geschlossenposition

- S1-S6: Schritte eines Verfahrens
- T1-T3: Schritte eines Verfahrens

## Patentansprüche

1. Mutter (1) zur Festlegung eines Bauteils an einem Träger, insbesondere einer Sanitärarmatur an einer Arbeitsplatte, umfassend
ein erstes Mutterteil (2), und
ein zweites Mutterteil (3), wobei
das erste Mutterteil (2) zumindest zwei Gewindelaschen (4) aufweist, die auf ihrer radialen Innenseite ein Gewinde (5) aufweisen, wobei die beiden Mutterteile (2, 3) relativ zueinander entlang einer axialen Achse verschiebbar (101) angeordnet sind, derart, dass in einer ersten Position - Offenposition (201) - die Gewindelaschen (4) des ersten Mutterteils (2) radial nach außen vorstehend anordenbar sind, und dass in einer zweiten Position - Geschlossenposition (202) - die Gewindelaschen (4) des ersten Mutterteils (2) mittels des zweiten Mutterteils (3), insbesondere radial nach innen hineinstehend, zum Eingriff in ein entsprechendes Außengewinde (50a) des Bauteils (50) anordenbar sind,
**dadurch gekennzeichnet, dass**
das erste und zweite Mutterteil (2, 3) relativ zueinander frei drehbar um die axiale Achse (101) ausgebildet sind.

2. Mutter (1) gemäß Anspruch 1, **dadurch gekennzeichnet, dass** das erste (2) und zweite Mutterteil (3) aneinander mittels einer Festlegeeinrichtung (6, 7) festlegbar sind, welche insbesondere lösbar ausgebildet ist, vorzugsweise wobei die Festlegeeinrichtung (6, 7) eine Rast-, Clips- oder Schnappeinrichtung (30) umfasst.

3. Mutter (1) gemäß Anspruch 2, **dadurch gekennzeichnet, dass** die Festlegeeinrichtung (6, 7) zumindest eine Kulisse (6) aufweist, in die zumindest ein Kulissenelement (7) eingreift, insbesondere wobei die zumindest eine Kulisse (6) in dem zweiten Mutterteil (3) angeordnet ist und das Kulissenelement (7) am ersten Mutterteil (2).

4. Mutter (1) gemäß einem der Ansprüche 1-3, **dadurch gekennzeichnet, dass** die Festlegevorrichtung (6, 7) aneinander gleitbare und gegenüber der axialen Richtung (101) unter einem Winkel (92) abgeschrägte Flächen (20, 21; 25, 26) an erstem und zweitem Mutterteil (2, 3) umfasst, insbesondere wobei der Winkel (92) bezogen auf die axiale Richtung (101) zumindest 5 Grad, insbesondere zumindest 10 Grad, vorzugsweise zumindest 15 Grad, insbesondere zumindest 30 Grad, beträgt.

5. Mutter (1) gemäß einem der Ansprüche 1-4, **dadurch gekennzeichnet, dass** eine Rückstelleinrichtung (8) angeordnet ist, die ausgebildet ist, eine Rückstellkraft in Richtung der Offenposition (201) auszuüben, vorzugsweise wobei die Rückstelleinrichtung (8) eine Federeinrichtung mit zumindest einem Federelement (9, 9`) umfasst, die zwischen erstem und zweitem Mutterteil (2, 3) angeordnet ist.

6. Mutter (1) gemäß Anspruch 5, **dadurch gekennzeichnet, dass** am zweiten Mutterteil (3) zumindest ein Rückhalteelement (12), insbesondere mehrere Rückhalteelemente (12) angeordnet sind, wobei das zumindest eine Federelement (9, 9`) an dem zumindest einen Rückhalteelement (12) abstützend anordenbar ist, vorzugsweise wobei ein Rückhalteelement (12) in Form eines Randes des zweiten Mutterteils (3) ausgebildet ist.

7. Mutter (1) gemäß einem der Ansprüche 5-6, **dadurch gekennzeichnet, dass** das zumindest eine Federelement (9) in Form einer Tellerfeder ausgebildet ist, welche lösbar zwischen erstem und zweitem Mutterteil (2, 3) angeordnet ist oder dass das zumindest eine Federelement (9) in Form von zumindest zwei, insbesondere symmetrisch, am ersten und/oder zweiten Mutterteil (2, 3) angeordneten Vorsprüngen in Richtung auf das jeweils andere Mutterteil ausgebildet ist.

8. Mutter (1) gemäß einem der Ansprüche 1-7, **dadurch gekennzeichnet, dass** die Rückstelleinrichtung (8) und Festlegeeinrichtung (6, 7) derart ausgebildet sind, sodass die Rückstelleinrichtung (8) und die Festlegeeinrichtung (6, 7) zur Bereitstellung der Offenposition (201) zusammenwirken.

9. Mutter (1) gemäß einem der Ansprüche 1-8, **dadurch gekennzeichnet, dass** die Gewindelaschen (4) in ihrem unbelasteten Zustand parallel zur axialen Richtung (101) angeordnet sind und/oder dass die Anzahl der Gewindelaschen (4) weniger als 30, vorzugsweise weniger als 15, insbesondere weniger als 8, vorzugsweise 4 und mehr als 2 beträgt.

10. Mutter (1) gemäß einem der Ansprüche 1-4, **dadurch gekennzeichnet, dass** eine Offenhalteeinrichtung (10, 11) zum Bereitstellen der Offenposition (201) angeordnet ist, vorzugsweise wobei die Offenhalteeinrichtung zumindest ein längliches Element (11) aufweist, welches in oder an zumindest einer Öffnung (10), insbesondere form- oder reibschlüssig, gehalten wird und während des Übergangs von der Offen- (201) in die Geschlossenposition (202) in die zumindest eine Öffnung (10) eingreift, insbesondere wobei das zumindest eine längliche Element (11) und die zumindest eine Öffnung (10) am ersten Mutterteil (2) angeordnet sind.

11. Mutter (1) gemäß einem der Ansprüche 1-10, **dadurch gekennzeichnet, dass** das erste Mutterteil (2) teilweise im zweiten Mutterteil (3) angeordnet ist und das erste Mutterteil (2) zumindest teilweise auf der radialen Außenseite des zweiten Mutterteils (3) angeordnet ist oder umgekehrt und/oder dass das zweite Mutterteil (3) auf der dem ersten Mutterteil (2) abgewandten axialen Seite eine Anlageeinrichtung (52, 53) zur Anlage der Mutter (1) an dem Bauteil (50) aufweist, vorzugsweise wobei die Anlageeinrichtung (52, 53) ein flächiges Bauteil umfasst, welches insbesondere dreiecksförmig ausgebildet ist.

12. Mutter (1) gemäß Anspruch 11, **dadurch gekennzeichnet, dass** die Anlageeinrichtung (52, 53) zumindest eine, insbesondere mehrere, Materialschwächungen (13), insbesondere Schlitze, zum Abtrennen aufweist.

13. System (100) zur Festlegung eines Bauteils (50) an einem Träger (51), umfassend
eine Mutter (1) gemäß einem der Ansprüche 1-12, wobei das Bauteil (50) ein Außengewinde (50a) aufweist, welches zu dem Gewinde (5) der Mutter (1) korrespondiert, sodass die Mutter (1) in ihrer Geschlossenposition (202) auf das Außengewinde (50a) aufschraubbar ist und wobei in ihrer Offenposition (201) das Gewinde (5) zumindest in einem Bereich (4b) mit einem Innendurchmesser versehbar ist, der größer ist als der Außendurchmesser des Außengewindes (50a).

14. Verfahren zum Festlegen eines Bauteils (50) an einem Träger (51), umfassend die Schritte:
- Bereitstellen (S1) einer Mutter (1) gemäß einem der Ansprüche 1-12 in der Offenposition (201),
- Bereitstellen (S2) des Bauteils (50), wobei das Bauteil (50) ein Außengewinde (50a) aufweist, welches zu dem Gewinde (5) der Mutter (1) korrespondiert, sodass die Mutter (1) in ihrer Geschlossenposition (202) auf das Außengewinde (50a) aufschraubbar ist,
- Anordnen (S3) des Bauteils (50) an dem Träger (51),
- Schieben (S4) der Mutter (1) in ihrer Offenposition (201) über das Außengewinde (50a) des Bauteils (50), bis die Mutter (1) mit ihrem zweiten Mutterteil (3) an dem Träger (51) anliegt,
- Betätigen (S5) des ersten Mutterteils (2), bis sich die Mutter (1) in ihrer Geschlossenposition (202) befindet zum Eingriff des Gewindes (5) in das Außengewinde (50a) des Bauteils (50), und
- Betätigen (S6) des Gewindes (5) der Mutter (1) durch Drehen der Mutter (1) zum Festlegen des Bauteils (50) an dem Träger (51).

15. Verfahren zum Lösen eines an einem Träger (51) festgelegten Bauteils (50), umfassend die Schritte:
- Bereitstellen (T1) einer Mutter (1) gemäß einem der Ansprüche 1-12 in ihrer Geschlossenposition (202) an dem Bauteil (50), wobei das Bauteil (50) ein Außengewinde (50a) aufweist, welches zu dem Gewinde (5) der Mutter (1) korrespondiert, und wobei das Gewinde (5) der Mutter (1) in das Außengewinde (50a) des Bauteils (50) eingreift,
- Betätigen (T2) des Gewindes (5) der Mutter (1) durch Drehen der Mutter (1) zum Lösen des Bauteils (50) von dem Träger (51), bis sich die Mutter (1) in ihrer Offenposition (201) befindet, und
- Freigeben (T3) der Mutter zum Verbringen der Mutter in ihre Offenposition (201) über das Außengewinde (50a) des Bauteils (50) zum Lösen des Bauteils (50) von dem Träger (51).
